# FASCICULE DE BREVET EUROPEEN

(11) **EP 3 506 610 B1**
(45) Date de publication et mention de la délivrance du brevet: **22.07.2020**
(21) Numéro de dépôt: 18215963.2
(22) Date de dépôt: 31.12.2018
(51) Int. Cl.: H04M 1/04, G06F 1/16, H04B 1/3888, H04M 1/18

(54) **DISPOSITIF DE PROTECTION D'UN APPAREIL INFORMATIQUE PORTABLE ET ENSEMBLE COMPRENANT UN APPAREIL INFORMATIQUE PORTABLE ET UN TEL DISPOSITIF DE PROTECTION**
SCHUTZVORRICHTUNG EINES TRAGBAREN IT-GERÄTS, UND EINHEIT AUS EINEM SOLCHEN TRAGBAREN IT-GERÄT UND EINER SOLCHEN SCHUTZVORRICHTUNG
DEVICE FOR PROTECTING A PORTABLE COMPUTER APPARATUS AND ASSEMBLY COMPRISING A PORTABLE COMPUTER APPARATUS AND SUCH A PROTECTION DEVICE

(30) Priorité: 02.01.2018 FR 1850011
(43) Date de publication de la demande: 03.07.2019
(73) Titulaire: FBO, 44230 Saint Sébastien sur Loire (FR)
(72) Inventeur: BRETAGNE, Olivier, 44120 VERTOU (FR)
(74) Mandataire: Godineau, Valérie

(56) Documents cités:
- WO-A1-2014/186764
- US-A1- 2008 123 287
- US-A1- 2013 273 983

## Description

### DOMAINE DE L'INVENTION

L'invention concerne un dispositif de protection d'un appareil informatique portable comprenant un écran, ainsi qu'un ensemble comprenant un appareil informatique portable et un tel dispositif de protection.

Elle concerne plus particulièrement un dispositif de protection d'un appareil informatique portable comprenant un écran, un cadre de protection rapporté positionnable autour de l'écran de l'appareil informatique et une base de rechargement électrique de l'appareil informatique raccordable au moins au secteur et/ou au réseau ethernet "POE Power over ethernet" et sur laquelle le cadre de protection est apte à être posé, ledit cadre de protection comprenant des montants, une traverse inférieure et une traverse supérieure, la traverse inférieure du cadre de protection comprenant une connectique, cette connectique comprenant au moins d'une part, une partie complémentaire d'une connectique équipant la base de rechargement électrique pour un raccordement électrique de la traverse inférieure du cadre de protection à la base de rechargement à l'état posé du cadre de protection sur la base de rechargement, d'autre part, une partie raccordable à l'appareil informatique pour permettre à l'état inséré de l'appareil informatique dans le cadre de protection et à l'état posé du cadre de protection sur la base de rechargement au moins une alimentation électrique de l'appareil informatique via la traverse inférieure du cadre de protection.

### ART ANTERIEUR

Un dispositif de protection du type précité est connu comme l'illustre le document US 2013/273983. Ce document révèle un boîtier de protection avec un couvercle arrière coulissant comprenant une batterie. Le boîtier de protection interagit avec un berceau de chargement.

La mise à disposition d'appareils informatiques portables, tels que des tablettes, dans des espaces, tels que les chambres d'hôtel, se répand. Toutefois, ces tablettes constituent, en l'état, des appareils fragiles qui peuvent être endommagés lors d'une chute. On est donc à la recherche de solutions aptes à permettre un usage de tels appareils informatiques par une multitude d'usagers tout en limitant les risques d'endommagement de tels appareils.

### BUTS ET RESUME

Un but de l'invention est donc de proposer un dispositif de protection d'un appareil informatique portable comprenant un écran dont la conception permet de manière simple de protéger l'appareil d'un endommagement en cas de chute.

A cet effet, l'invention a pour objet un dispositif de protection d'un appareil informatique portable comprenant un écran, un cadre de protection rapporté positionnable autour de l'écran de l'appareil informatique et une base de rechargement électrique de l'appareil informatique raccordable au moins au secteur et/ou au réseau ethernet "POE Power over ethernet" et sur laquelle le cadre de protection est apte à être posé, ledit cadre de protection comprenant des montants, une traverse inférieure et une traverse supérieure, la traverse inférieure du cadre de protection comprenant une connectique, cette connectique comprenant au moins d'une part, une partie complémentaire d'une connectique équipant la base de rechargement électrique pour un raccordement électrique de la traverse inférieure du cadre de protection à la base de rechargement à l'état posé du cadre de protection sur la base de rechargement, d'autre part, une partie raccordable à l'appareil informatique pour permettre à l'état inséré de l'appareil informatique dans le cadre de protection et à l'état posé du cadre de protection sur la base de rechargement au moins une alimentation électrique de l'appareil informatique via la traverse inférieure du cadre de protection,
caractérisé en ce que le cadre de protection comprend quatre profilés, aptes à former respectivement les montants et les traverses inférieure et supérieure du cadre de protection, quatre pièces d'angle et des moyens de liaison des pièces d'angle et des profilés entre eux, les profilés et les pièces d'angle étant fendus longitudinalement pour délimiter une rainure à l'intérieur de laquelle une partie du bord périphérique de l'écran de l'appareil informatique est apte à s'insérer, les moyens de liaison des profilés et des pièces d'angle entre eux étant configurés pour permettre une liaison indémontable entre profilé et pièce d'angle à l'état monté du cadre.

L'utilisation d'un cadre rapporté positionnable autour de l'écran de l'appareil informatique et intégrant la connectique permet d'une part, en raison de la conception du cadre, l'adaptation du dispositif de protection à tout type d'appareil, quelles que soient notamment les caractéristiques dimensionnelles de l'appareil, d'autre part la protection de la connectique de l'appareil informatique constituant une zone sensible de l'appareil informatique. En outre, cette conception d'un cadre rapporté intégrant la connectique permet la conception d'une connectique universelle adaptée à tout type d'appareil informatique. Enfin, en cas d'endommagement de la connectique, seul le remplacement de la base de rechargement et/ou de la traverse inférieure du cadre est nécessaire sans avoir à intervenir sur l'appareil informatique. Il en résulte une réduction du coût de maintenance sans nuire à l'universalité du dispositif de protection.

Selon un mode de réalisation de l'invention, les pièces d'angle affectent la forme d'équerre en L avec chaque branche du L s'insérant dans une extrémité de l'un des profilés.

Selon un mode de réalisation de l'invention, les moyens de liaison entre l'un des profilés et l'une des pièces d'angle comprennent au moins un organe de liaison traversant un premier perçage ménagé dans le profilé et un deuxième perçage ménagé dans la pièce d'angle, ce deuxième perçage étant disposé en correspondance du premier perçage à l'état couplé du profilé et de la pièce d'angle.

Selon un mode de réalisation de l'invention, les moyens de liaison des profilés et des pièces d'angle entre eux sont configurés pour permettre une liaison invisible depuis l'une des faces du cadre de protection à savoir, de préférence, la face dite avant du cadre de protection de l'appareil informatique correspondant à la face du cadre de protection regardée lors de la visualisation de l'écran à l'état inséré de l'appareil informatique dans le cadre de protection.

Selon un mode de réalisation de l'invention, la partie de la connectique de la traverse inférieure du cadre de protection raccordable à l'appareil informatique comprend un connecteur de type USB.

Selon un mode de réalisation de l'invention, la partie de la connectique de la traverse inférieure du cadre de protection complémentaire de la connectique équipant la base de rechargement électrique comprend au moins une pastille électriquement conductrice disposée en affleurement de la traverse inférieure.

Selon un mode de réalisation de l'invention, la base de rechargement électrique affecte la forme d'un boîtier réalisé en au moins une première partie et une deuxième partie de boîtier, la première partie de boîtier se présentant extérieurement en L pour former un siège et un dosseret, le siège intégrant la connectique de la base de rechargement et le dosseret étant apte à former une surface d'appui de l'une des faces du cadre de protection à l'état raccordé électriquement du cadre de protection à la base de rechargement.

Selon un mode de réalisation de l'invention, le cadre de protection comprend au moins un élément d'identification du cadre.

Selon un mode de réalisation de l'invention, la deuxième partie de boîtier comprend extérieurement une surface plane d'appui pour l'appui du boîtier sur une surface support, cette deuxième partie de boîtier comprenant au moins deux positions d'assemblage avec la première partie du boîtier et correspondant l'une, à une position dans laquelle la surface plane de la deuxième partie du boîtier forme le dos du dosseret, l'autre, à une position dans laquelle la surface plane de la deuxième partie de boîtier forme le dessous du siège de la première partie de boîtier.

Il en résulte la possibilité de positionner de manière aisée la base de rechargement électrique, soit sur une surface support verticale, soit sur une surface support horizontale

L'invention a encore pour objet un ensemble comprenant un appareil informatique portable comprenant un écran et un dispositif de protection dudit appareil informatique, caractérisé en ce que le dispositif de protection est du type précité.

Selon un mode de réalisation dudit ensemble, l'appareil informatique portable est choisi dans le groupe des appareils formés par les téléphones portables, les tablettes, et les ordinateurs portables.

### BREVE DESCRIPTION DES FIGURES

L'invention sera bien comprise à la lecture de la description suivante d'exemples de réalisation, en référence aux dessins annexés dans lesquels :
- la figure 1 représente une vue en perspective, en position éclatée des éléments le constituant, d'un cadre de protection d'un dispositif de protection conforme à l'invention ;

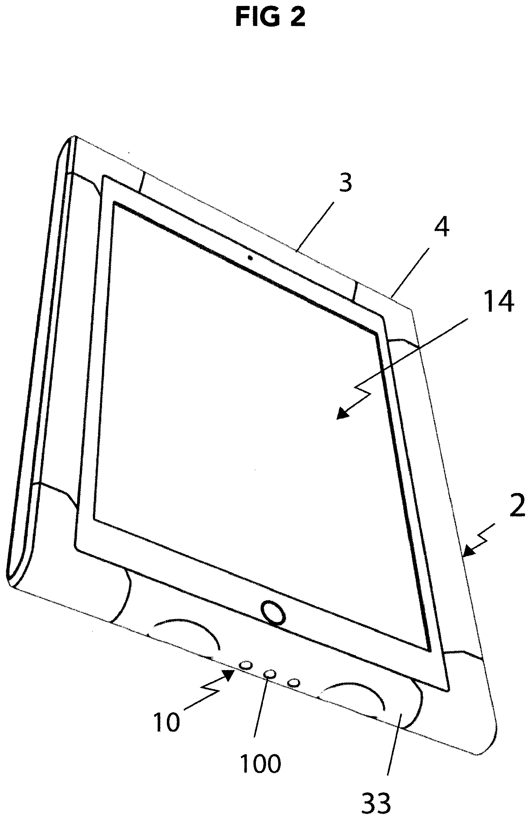

- la figure 2 représente une vue en perspective du cadre de protection de la figure 1 à l'état assemblé des éléments constituant le cadre ;

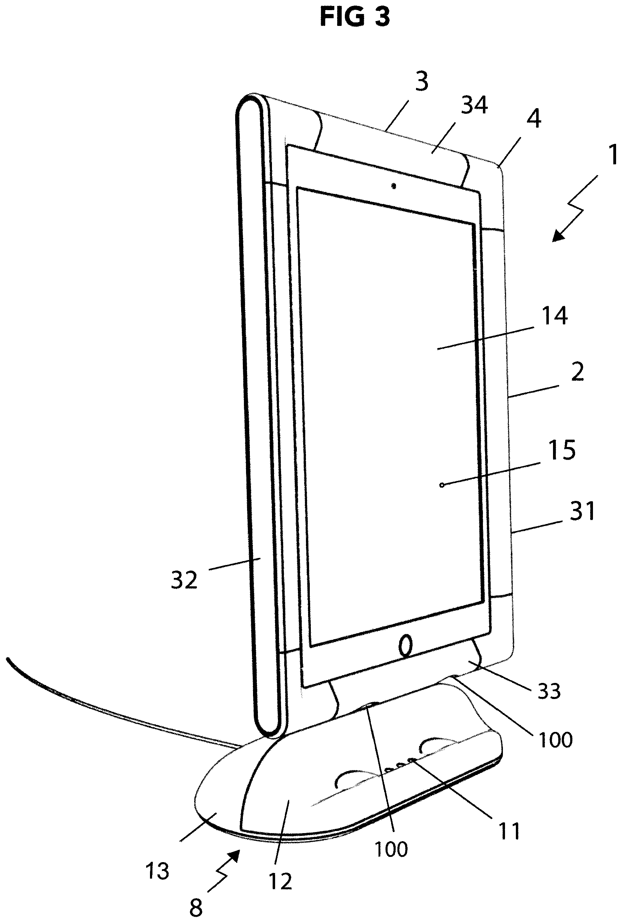

- la figure 3 représente une vue en perspective du cadre de protection de la figure 2 prêt à être posé sur une base de rechargement électrique, prise côté face avant du cadre de protection ;

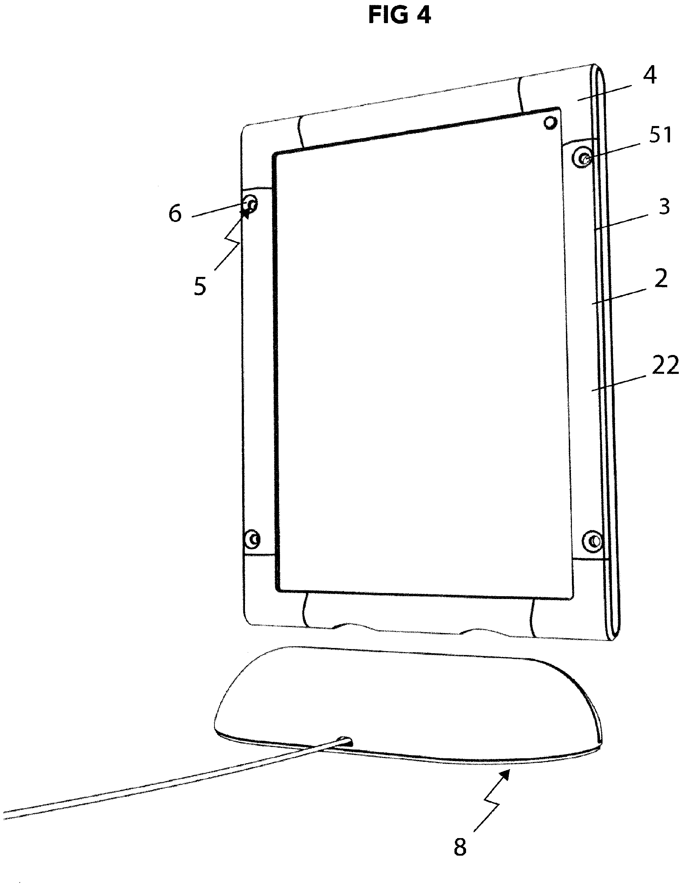

- la figure 4 représente une vue en perspective du cadre de protection de la figure 2 prêt à être posé sur une base de rechargement électrique, prise côté face arrière du cadre de protection ;

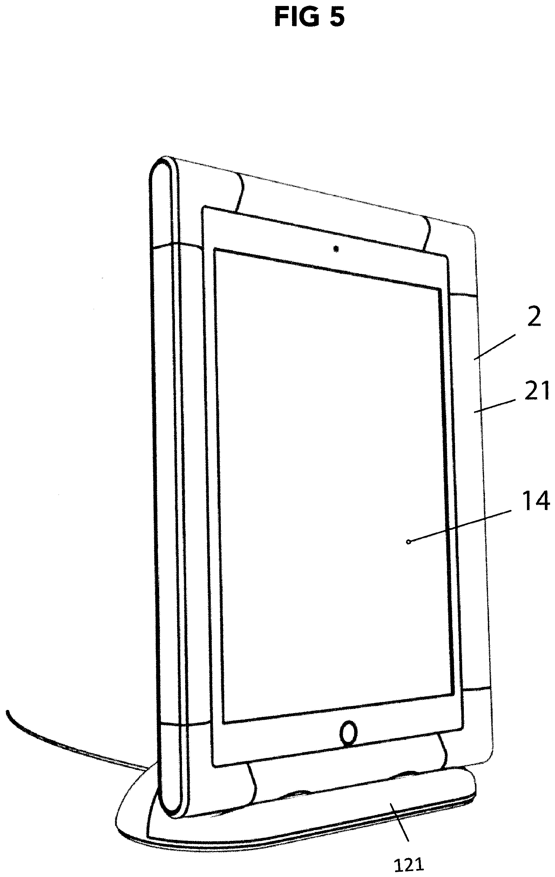

- la figure 5 représente une vue en perspective du cadre de protection de la figure 2 à l'état posé sur une base de rechargement électrique ;

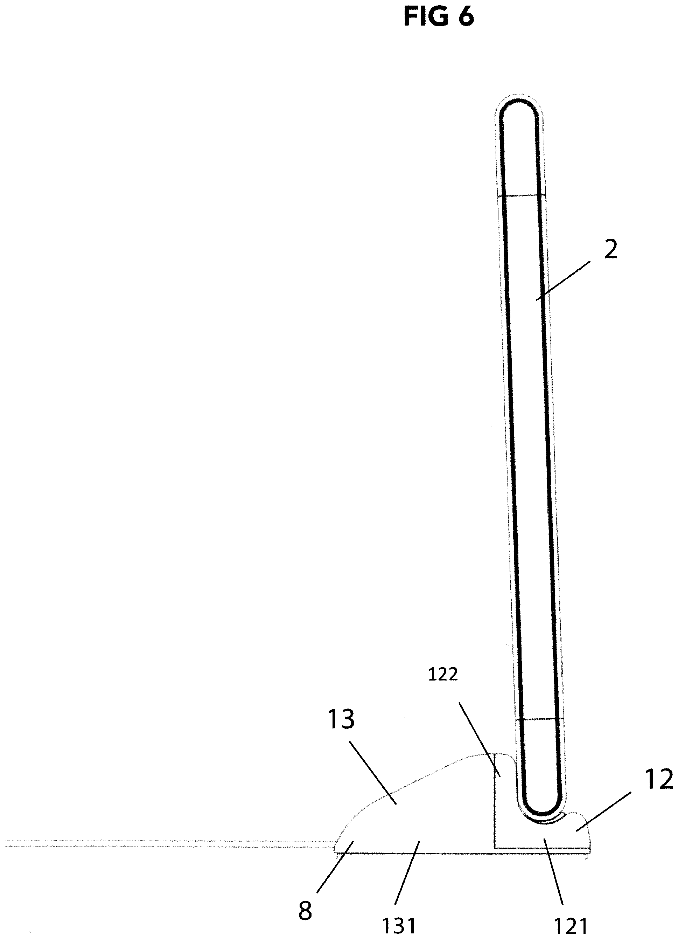

- la figure 6 représente une vue en coupe transversale d'un dispositif de protection en configuration de pose de la base de rechargement sur une surface support horizontale ;
- la figure 7 représente une vue en perspective en position éclatée des éléments la constituant d'une base de rechargement en configuration de pose sur une surface support horizontale ;
- la figure 8 représente une vue en perspective en position éclatée des éléments la constituant d'une base de rechargement en configuration de pose sur une surface support verticale ;

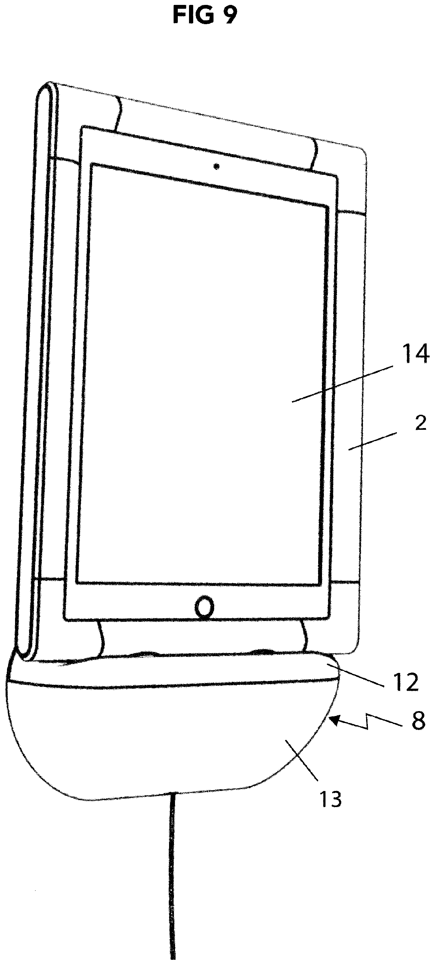

- la figure 9 représente une vue en perspective d'un dispositif de protection en configuration de pose de la base de rechargement sur une surface support verticale ; et

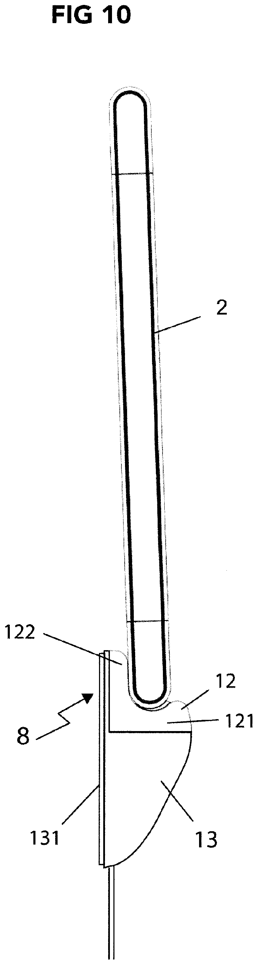

- la figure 10 représente une vue en coupe transversale d'un dispositif de protection en configuration de pose de la base de rechargement sur une surface support verticale.

### DESCRIPTION DETAILLEE

Comme mentionné ci-dessus, l'invention a pour objet un dispositif 1 de protection d'un appareil 14 informatique portable équipé d'un écran 15, ainsi que l'ensemble formé par le dispositif 1 de protection et l'appareil 14 informatique qui en résulte. Ce dispositif 1 de protection comprend un cadre 2 de protection rapporté positionnable autour de l'écran 15 de l'appareil 14 informatique et une base 8 de rechargement électrique de l'appareil 14 informatique sur laquelle le dispositif 1 de protection est apte à être posé et maintenu dans une position dans laquelle il s'étend à l'état dressé comme représenté.

De manière caractéristique à l'invention, ce cadre 2 de protection comprend quatre profilés 3, aptes à former respectivement les montants 31 et 32 et les traverses inférieure 33 et supérieure 34 du cadre 2 de protection, quatre pièces d'angle 4 et des moyens 5 de liaison des pièces 4 d'angle et des profilés 3 entre eux. Grâce à la conception de ce cadre 2 de protection, les profilés 3 peuvent être adaptés en longueur pour s'adapter à tout type d'appareil 14 informatique portable de forme générale quadrangulaire.

Il doit être noté que généralement l'appareil 14 informatique portable est choisi dans le groupe des appareils formés par les téléphones portables, les tablettes et les ordinateurs portables. Dans l'exemple représenté, l'appareil 14 informatique portable est formé par une tablette.

Dans les exemples représentés, les pièces 4 d'angle affectent la forme d'équerre en L avec chaque branche du L s'insérant dans une extrémité des profilés 3. En particulier, dans les exemples représentés, les pièces d'angle sont chacune réalisées en deux éléments et comprennent un élément d'habillage venant à recouvrement d'un élément en L, solidarisé par collage à l'élément en L.

Pour l'assemblage d'un profilé 3 avec une pièce d'angle, les moyens 5 de liaison comprennent, dans l'exemple représenté, un organe 51 de liaison traversant un premier perçage 6 ménagé dans le profilé 3 et un deuxième perçage 7 ménagé dans la pièce 4 d'angle, ce deuxième perçage 7 étant disposé en correspondance du premier perçage 6 à l'état couplé du profilé 3 et de la pièce 4 d'angle. Cet organe 51 de liaison est ici formé par une vis dont la tête est ensuite masquée à l'aide d'un bouchon rapporté et fixé par collage dans le premier perçage 6. Ainsi, l'accès à la tête de vis est empêché. On note que ce premier perçage 6 du profilé 3 est accessible depuis la face 22 arrière du cadre 2 de protection opposée à la face 21 avant du cadre et inaccessible depuis la face avant 21 du cadre. En effet, le cadre 2 de protection comprend deux faces, à savoir une face avant 21 et une face arrière 22 avec la face avant du cadre 2 de protection correspondant à la face du cadre 2 de protection regardé lors de la visualisation de l'écran 15 de l'appareil 14 informatique, à l'état inséré de l'appareil 14 informatique dans le cadre 2 de protection.

Dans les exemples représentés, les profilés 3 sont des corps creux allongés. Le premier perçage 6 ménagé dans chaque profilé 3 traverse donc la paroi du profilé au niveau de la zone du profilé formant la face arrière du cadre 2 de protection pour déboucher dans la cavité du corps creux formé par le profilé. Ainsi, le premier perçage 6 est invisible depuis la face avant du cadre. Il en résulte que les moyens 5 de liaison des profilés 3 et des pièces 4 d'angle entre eux sont configurés pour permettre une liaison indémontable invisible depuis la face 21 avant du cadre 2 de protection.

L'organe 51 de liaison de type vis décrit ci-dessus aurait pu être remplacé par un organe de liaison se présentant sous forme d'un corps allongé inséré à force dans le passage ménagé par les premier et deuxième perçages pour rendre cet organe de liaison indémontable.

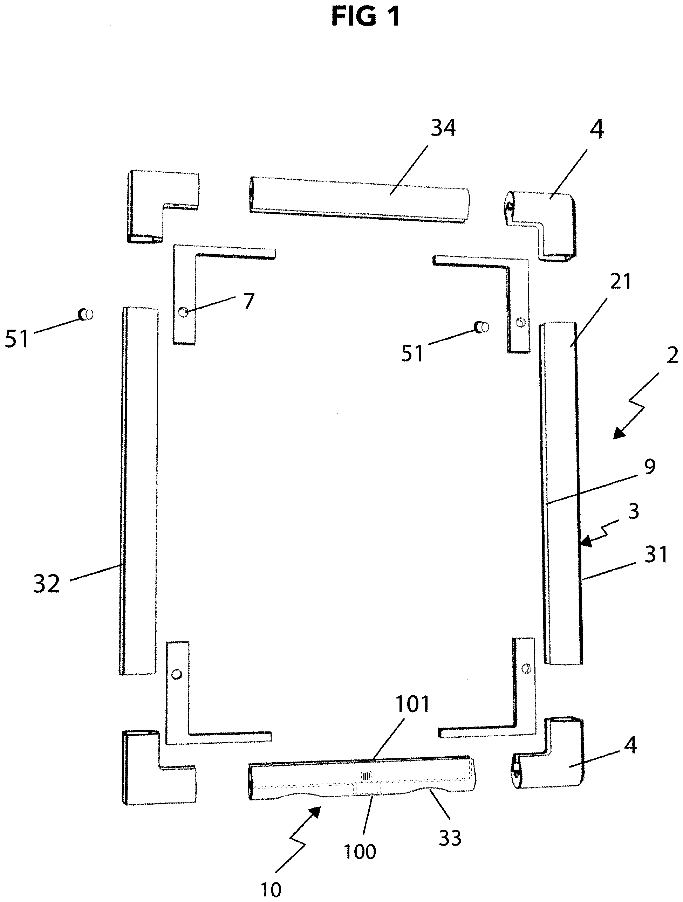

Ainsi, comme l'illustre la figure 1, les pièces 4 d'angle sont, à l'une de leurs extrémités, fixées à l'un des profilés par collage et à l'autre de leurs extrémités fixées à l'un des profilés à l'aide d'un organe de liaison comme décrit ci-dessus. Il est donc prévu quatre organes de liaison, à savoir un par pièce d'angle.

Grâce à cette configuration des moyens de liaison des profilés 3 et des pièces 4 d'angle entre eux, il en résulte une liaison indémontable et invisible depuis la face avant du cadre 2 de protection limitant ainsi les tentatives de démontage du cadre 2 de protection par les usagers de l'appareil 14 informatique portable.

Pour aider à la mise en place de l'appareil 14 informatique portable à l'intérieur du cadre 2 de protection, les profilés 3 et les pièces 4 d'angle sont fendus longitudinalement pour délimiter une rainure 9 à l'intérieur de laquelle une partie du bord périphérique de l'écran 15 de l'appareil 14 informatique est apte à s'insérer.

Les profilés 3 sont généralement réalisés en matière de synthèse, ce qui leur confère une certaine élasticité favorisant cette insertion.

Pour permettre un raccordement de l'appareil 14 informatique au secteur ou à un réseau ethernet en vue de son rechargement électrique, la traverse 33 inférieure du cadre 2 de protection comprend une connectique 10. Cette connectique 10 comprend au moins d'une part, une partie 100 complémentaire d'une connectique 11 équipant la base 8 de rechargement électrique pour un raccordement électrique de la traverse 33 inférieure du cadre 2 de protection à la base 8 de rechargement à l'état posé du cadre 2 de protection sur la base 8 de rechargement, d'autre part, une partie 101 raccordable à l'appareil 14 informatique pour permettre à l'état inséré de l'appareil 14 informatique dans le cadre 2 de protection et à l'état posé du cadre 2 de protection sur la base 8 de rechargement au moins d'une alimentation électrique de l'appareil 14 informatique via la traverse 33 inférieure du cadre 2 de protection. Les parties 100 et 101 de la connectique 10 sont reliées électriquement l'une à l'autre. Dans l'exemple représenté, la connectique 11 équipant la base 8 de rechargement comprend au moins un connecteur de type lame-ressort. Il est également possible en complément de raccorder l'appareil informatique à un flux de données à l'état inséré dans le cadre de protection et à l'état posé du cadre 2 de protection sur la base de rechargement.

Dans l'exemple représenté, la partie de la connectique de la traverse 33 inférieure du cadre 2 de protection raccordable à l'appareil 14 informatique comprend un connecteur de type USB ou un connecteur "lightning" marque déposée pour les appareils de la marque Apple.

La partie 100 de la connectique 10 de la traverse 33 inférieure du cadre 2 de protection complémentaire de la connectique 11 équipant la base 8 de rechargement électrique comprend, quant à elle, des pastilles d'alimentation.

L'insertion de cette connectique 10 dans la traverse inférieure du cadre 2 de protection permet de protéger au mieux la connectique.

La base 8 de rechargement électrique affecte quant à elle la forme d'un boîtier réalisé en au moins une première partie 12 de boîtier et une deuxième partie 13 de boîtier. La première partie 12 de boîtier affecte extérieurement la forme d'un L et forme un siège 121 à l'aide de la première branche du L et un dosseret 122 à l'aide de la deuxième branche du L. Le siège 121 intègre la connectique 11 de la base 8 de rechargement et le dosseret 122 est apte à former une surface d'appui de l'une des faces, en l'occurrence la face arrière du cadre 2 de protection, à l'état raccordé électriquement du cadre 2 de protection à la base 8 de rechargement.

Cette connectique 11 de la base 8 de rechargement est disposée au niveau de la partie formant l'assise du siège 121 de la première partie 12 de boîtier constitutif du boîtier de la base 8 de rechargement électrique.

Les faces formant le dessous du siège et le dos du dosseret sont des faces ouvertes. On appelle dos du dosseret la partie arrière du dosseret, la partie avant du dosseret correspondant à celle formant dossier contre laquelle il est possible de prendre appui. Ces faces ouvertes sont fermées à l'aide de la deuxième partie 13 de boîtier assemblée par emboîtement et/ou encliquetage à la première partie 12 de boîtier. Cette deuxième partie 13 de boîtier comprend extérieurement une surface 131 plane d'appui pour l'appui du boîtier sur une surface support. Cette deuxième partie 13 du boîtier comprend au moins deux positions d'assemblage avec la première partie 12 du boîtier. La première position d'assemblage correspond à une position dans laquelle la surface 131 plane de la deuxième partie de boîtier forme le dos du dosseret 122 de la première partie de boîtier. La deuxième position correspond à une position dans laquelle la surface 131 plane de la deuxième partie de boîtier forme le dessous du siège 121 de la première partie de boîtier.

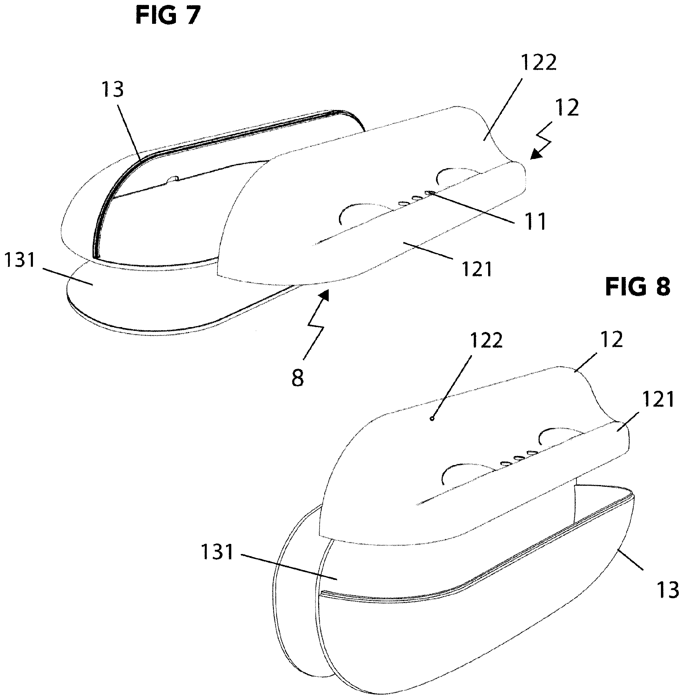

La position dans laquelle la surface 131 plane ferme la face arrière ouverte du dosseret et forme le dos du dosseret est représentée à la figure 8. Cette position permet un positionnement de la base 8 de rechargement électrique en applique sur une surface support verticale. La position dans laquelle la surface 131 plane ferme la face du dessous ouverte du siège 121 et forme le dessous du siège est représentée à la figure 7. Cette position permet un positionnement de la base 8 de rechargement en appui sur une surface support horizontale. Ainsi, à l'aide d'un même boîtier, il est possible de poser la base de rechargement électrique sur une surface horizontale ou verticale sans nuire au maintien du cadre 2 de protection dressée à l'état posé sur la base 8 de rechargement.

Pour procéder à la protection d'un appareil informatique portable à l'aide d'un dispositif 1 de protection, tel que décrit ci-dessus, on procède généralement comme suit. On réalise un cadre ouvert par pré-assemblage d'au moins trois profilés et des pièces de liaison des profilés entre eux. Ainsi, dans l'exemple représenté, l'une des traverses, par exemple la traverse inférieure et les montants sont préassemblés par deux pièces 4 d'angle. On glisse l'appareil informatique dans le cadre ouvert ainsi ménagé jusqu'à raccordement de la connectique de l'appareil informatique avec la connectique de la traverse inférieure du cadre. On ferme le cadre 2 de protection par assemblage du dernier profilé, en l'occurrence ici la traverse supérieure, et des pièces d'angle restantes. L'appareil informatique ainsi protégé est alors prêt à être posé sur la base de rechargement raccordable au secteur par une liaison filaire.

## Revendications

1. Dispositif (1) de protection d'un appareil (14) informatique portable comprenant un écran (15), un cadre (2) de protection rapporté positionnable autour de l'écran (15) de l'appareil (14) informatique et une base (8) de rechargement électrique de l'appareil (14) informatique raccordable au moins au secteur et/ou au réseau ethernet "POE Power over ethernet" et sur laquelle le cadre (2) de protection est apte à être posé, ledit cadre (2) de protection comprenant des montants (31, 32), une traverse inférieure (33) et une traverse supérieure (34), la traverse (33) inférieure du cadre (2) de protection comprenant une connectique (10), cette connectique (10) comprenant au moins d'une part, une partie (100) complémentaire d'une connectique (11) équipant la base (8) de rechargement électrique pour un raccordement électrique de la traverse (33) inférieure du cadre (2) de protection à la base (8) de rechargement à l'état posé du cadre (2) de protection sur la base (8) de rechargement, d'autre part, une partie (101) raccordable à l'appareil (14) informatique pour permettre à l'état inséré de l'appareil (14) informatique dans le cadre (2) de protection et à l'état posé du cadre (2) de protection sur la base (8) de rechargement au moins une alimentation électrique de l'appareil (14) informatique via la traverse (33) inférieure du cadre (2) de protection, **caractérisé en ce que** le cadre (2) de protection comprend quatre profilés (3), aptes à former respectivement les montants (31, 32) et les traverses inférieure (33) et supérieure (34) du cadre (2) de protection, quatre pièces d'angle (4) et des moyens (5) de liaison des pièces (4) d'angle et des profilés (3) entre eux, les profilés (3) et les pièces (4) d'angle étant fendus longitudinalement pour délimiter une rainure (9) à l'intérieur de laquelle une partie du bord périphérique de l'écran (15) de l'appareil (14) informatique est apte à s'insérer, les moyens (5) de liaison des profilés (3) et des pièces (4) d'angle entre eux étant configurés pour permettre une liaison indémontable entre profilé (3) et pièce (4) d'angle à l'état monté du cadre (2).

2. Dispositif (1) de protection selon la revendication 1, **caractérisé en ce que** les pièces (4) d'angle affectent la forme d'équerre en L avec chaque branche du L s'insérant dans une extrémité de l'un des profilés (3).

3. Dispositif (1) de protection selon l'une des revendications 1 ou 2, **caractérisé en ce que** les moyens (5) de liaison entre l'un des profilés (3) et l'une des pièces (4) d'angle comprennent au moins un organe (51) de liaison traversant un premier perçage (6) ménagé dans le profilé (3) et un deuxième perçage (7) ménagé dans la pièce (4) d'angle, ce deuxième perçage (7) étant disposé en correspondance du premier perçage (6) à l'état couplé du profilé (3) et de la pièce (4) d'angle.

4. Dispositif (1) de protection selon l'une des revendications 1 à 3, **caractérisé en ce que** les moyens (5) de liaison des profilés (3) et des pièces (4) d'angle entre eux sont configurés pour permettre une liaison invisible depuis l'une des faces du cadre (2) de protection à savoir, de préférence, la face (21) dite avant du cadre (2) de protection de l'appareil informatique correspondant à la face du cadre (2) de protection regardée lors de la visualisation de l'écran (15) à l'état inséré de l'appareil (14) informatique dans le cadre (2) de protection.

5. Dispositif (1) de protection selon l'une des revendications 1 à 4, **caractérisé en ce que** la partie (101) de la connectique (10) de la traverse (33) inférieure du cadre (2) de protection raccordable à l'appareil (14) informatique comprend un connecteur de type USB.

6. Dispositif (1) de protection selon l'une des revendications 1 à 5, **caractérisé en ce que** la partie (100) de la connectique (10) de la traverse (33) inférieure du cadre (2) de protection complémentaire de la connectique (11) équipant la base (8) de rechargement électrique comprend au moins une pastille électriquement conductrice disposée en affleurement de la traverse (33) inférieure.

7. Dispositif (1) de protection selon l'une des revendications 1 à 6, **caractérisé en ce que** la base (8) de rechargement électrique affecte la forme d'un boîtier réalisé en au moins une première partie (12) et une deuxième partie (13) de boîtier, la première partie (12) de boîtier se présentant extérieurement en L pour former un siège (121) et un dosseret (122), le siège (121) intégrant la connectique (11) de la base (8) de rechargement et le dosseret (122) étant apte à former une surface d'appui de l'une des faces (21, 22) du cadre (2) de protection à l'état raccordé électriquement du cadre (2) de protection à la base (8) de rechargement.

8. Dispositif (1) de protection selon la revendication 7, **caractérisé en ce que** la deuxième partie (13) de boîtier comprend extérieurement une surface (131) plane d'appui pour l'appui du boîtier sur une surface support, cette deuxième partie (13) de boîtier comprenant au moins deux positions d'assemblage avec la première partie (12) du boîtier et correspondant l'une, à une position dans laquelle la surface (131) plane de la deuxième partie (13) de boîtier forme le dos du dosseret (122) de la première partie (12) de boîtier, l'autre, à une position dans laquelle la surface (131) plane de la deuxième partie (13) de boîtier forme le dessous du siège (121).

9. Ensemble comprenant un appareil (14) informatique portable comprenant un écran (15) et un dispositif (1) de protection dudit appareil (14) informatique, **caractérisé en ce que** le dispositif (1) de protection est conforme à l'une des revendications 1 à 8.

10. Ensemble selon la revendication 9, **caractérisé en ce que** l'appareil (14) informatique portable est choisi dans le groupe des appareils formés par les téléphones portables, les tablettes et les ordinateurs portables.

## Patentansprüche

1. Schutzvorrichtung (1) eines tragbaren IT-Geräts (14), umfassend einen Bildschirm (15), einen angefügten Schutzrahmen (2), der um den Bildschirm (15) des IT-Geräts (14) positionierbar ist, und eine elektrische Ladebasis (8) des IT-Geräts (14), die mindestens an das Stromnetz und/oder das Ethernetnetz "POE Power over ethernet" anschließbar ist und auf welcher der Schutzrahmen (2) positionierbar ist, wobei der Schutzrahmen (2) Holme (31, 32), einen unteren Querträger (33) und einen oberen Querträger (34) umfasst, wobei der untere Querträger (33) des Schutzrahmens (2) eine Verbindungstechnik (10) umfasst, wobei diese Verbindungstechnik (10) zum einen mindestens einen komplementären Teil (100) einer Verbindungstechnik (11), der die elektrische Ladebasis (8) für einen elektrischen Anschluss des unteren Querträgers (33) des Schutzrahmens (2) an die Ladebasis (8) im auf der Ladebasis (8) positionierten Zustand des Schutzrahmens (2) ausstattet, zum anderen einen an das IT-Gerät (14) anschließbaren Teil (101) umfasst, um im in dem Schutzrahmen (2) eingesetzten Zustand des IT-Geräts (14) und im auf der Ladebasis (8) positionierten Zustand des Schutzrahmens (2) mindestens eine elektrische Versorgung des IT-Geräts (14) über den unteren Querträger (33) des Schutzrahmens (2) zu erlauben,
**dadurch gekennzeichnet, dass** der Schutzrahmen (2) vier Profile (3), die imstande sind, jeweils die Holme (31, 32) und den unteren (33) und oberen (34) Querträger des Schutzrahmens (2) zu bilden, vier Eckteile (4) und Verbindungsmittel (5) der Eckteile (4) und der Profile (3) miteinander umfasst, wobei die Profile (3) und die Eckteile (4) längs geschlitzt sind, um eine Nut (9) zu begrenzen, in deren Inneren ein Teil des Umfangsrandes des Bildschirms (15) des IT-Geräts (14) einsetzbar ist, wobei die Verbindungsmittel (5) der Profile (3) und der Eckteile (4) miteinander ausgelegt sind, um eine nicht demontierbare Verbindung zwischen Profil (3) und Eckteil (4) in montiertem Zustand des Rahmens (2) zu erlauben.

2. Schutzvorrichtung (1) nach Anspruch 1, **dadurch gekennzeichnet, dass** die Eckteile (4) die Form eines L-förmigen Winkelstücks aufweisen, wobei sich jeder Schenkel des L in ein Ende von einem der Profile (3) einfügt.

3. Schutzvorrichtung (1) nach einem der Ansprüche 1 oder 2, **dadurch gekennzeichnet, dass** die Verbindungsmittel (5) zwischen einem der Profile (3) und einem der Eckteile (4) mindestens eine Verbindungseinrichtung (51) umfassen, die eine erste Bohrung (6) durchquert, die in dem Profil (3) ausgebildet ist, und eine zweite Bohrung (7), die im Eckteil (4) ausgebildet ist, wobei diese zweite Bohrung (7) im gekoppelten Zustand des Profils (3) und des Eckteils (4) in Übereinstimmung mit der ersten Bohrung (6) angeordnet ist.

4. Schutzvorrichtung (1) nach einem derAnsprüche 1 bis 3, **dadurch gekennzeichnet, dass** die Verbindungsmittel (5) der Profile (3) und der Eckteile (4) miteinander ausgelegt sind, um eine unsichtbare Verbindung ab einer der Flächen des Schutzrahmens (2), nämlich vorzugsweise der vorderen Fläche (21) des Schutzrahmens (2) des entsprechenden IT-Geräts, mit der Fläche des Schutzrahmens (2) zu erlauben, die bei der Visualisierung des Bildschirms (15) im in den Schutzrahmen (2) eingesetzten Zustand des IT-Geräts (14) betrachtet wird.

5. Schutzvorrichtung (1) nach einem derAnsprüche 1 bis 4, **dadurch gekennzeichnet, dass** der Teil (101) der Verbindungstechnik (10) des unteren Querträgers (33) des Schutzrahmens (2), der an ein IT-Gerät (14) anschließbar ist, einen Verbinder vom Typ USB umfasst.

6. Schutzvorrichtung (1) nach einem derAnsprüche 1 bis 5, **dadurch gekennzeichnet, dass** der Teil (100) der Verbindungstechnik (10) des unteren Querträgers (33) des Schutzrahmens (2), der zu der Verbindungstechnik (11) komplementär ist, die die elektrische Ladebasis (8) ausstattet, mindestens ein elektrisch leitendes Pad umfasst, das bündig zum unteren Querträger (33) angeordnet ist.

7. Schutzvorrichtung (1) nach einem derAnsprüche 1 bis 6, **dadurch gekennzeichnet, dass** die elektrische Ladebasis (8) die Form eines Gehäuses aufweist, das aus mindestens einem ersten Gehäuseteil (12) und einem zweiten Gehäuseteil (13) hergestellt ist, wobei der erste Gehäuseteil (12) außen in L-Form vorliegt, um einen Sitz (121) und eine Rücklehne (122) zu bilden, wobei der Sitz (121) die Verbindungstechnik (11) der Ladebasis (8) integriert und die Rücklehne (122) imstande ist, im elektrisch angeschlossenen Zustand des Schutzrahmens (2) an die Ladebasis (8) eine Stützfläche für eine der Flächen (21, 22) des Schutzrahmens (2) zu bilden.

8. Schutzvorrichtung (1) nach Anspruch 7, **dadurch gekennzeichnet, dass** der zweite Gehäuseteil (13) außen eine ebene Stützoberfläche (131) zur Abstützung des Gehäuses auf einer Haltefläche umfasst, wobei dieser zweite Gehäuseteil (13) mindestens zwei Montagepositionen mit dem ersten Teil (12) des Gehäuses umfasst und wobei die eine einer Position, in welcher die ebene Oberfläche (131) des zweiten Gehäuseteils (13) den Rücken der Rücklehne (122) des ersten Gehäuseteils (12) bildet, wobei die andere einer Position, in welcher die ebene Oberfläche (131) des zweiten Gehäuseteils (13) die Unterseite des Sitzes (121) bildet, entspricht.

9. Einheit, umfassend ein tragbares IT-Gerät (14), umfassend einen Bildschirm (15), und eine Schutzvorrichtung (1) des IT-Geräts (14), **dadurch gekennzeichnet, dass** die Schutzvorrichtung (1) nach einem der Ansprüche 1 bis 8 ist.

10. Einheit nach Anspruch 9, **dadurch gekennzeichnet, dass** das tragbare IT-Gerät (14) aus der Gruppe der Geräte ausgewählt ist, die von den tragbaren Telefonen, den Tablets und den tragbaren Rechnern gebildet ist.

## Claims

1. A device (1) for protecting a portable computer apparatus (14) comprising a screen (15), an attached protective frame (2) able to be positioned around the screen (15) of the computer apparatus (14) and an electrical recharging base (8) of the computer apparatus (14) connectable to at least the sector and/or the "POE Power over Ethernet" Ethernet network and on which the protective frame (2) is able to be placed, said protective frame (2) comprising uprights (31, 32), a lower crosspiece (33) and an upper crosspiece (34), the lower crosspiece (33) of the protective frame (2) comprising a connector (10), this connector (10) comprising at least, on the one hand, a part (100) complementary to a connector (11) equipping the electrical recharging base (8) for an electrical connection of the lower crosspiece (33) of the protective frame (2) to the recharging base (8) in the state of the protective frame (2) placed on the recharging base (8), on the other hand, a part (101) connectable to the computer apparatus (14) to allow, in the state of the computer apparatus (14) inserted into the protective frame (2) and in the state of the protective frame (2) placed on the recharging base (8), at least an electrical power supply of the computer apparatus (14) via the lower crosspiece (33) of the protective frame (2),
**characterized in that** the protective frame (2) comprises four profiles (3), respectively able to form the uprights (31, 32) and the lower (33) and upper (34) crosspieces of the protective frame (2), four corner pieces (4) and connecting means (5) for connecting the corner pieces (4) and profiles (3) to one another, the profiles (3) and the corner pieces (4) being longitudinally slotted to delimit a groove (9) inside which part of the peripheral edge of the screen (15) of the computer apparatus (14) is able to be inserted, the connecting means (5) of the profiles (3) and corner parts (4) relative to one another being configured to allow a nonremovable connection between profile (3) and corner part (4) in the mounted state of the frame (2).

2. The protection device (1) according to claim 1, **characterized in that** the corner parts (4) assume the form of an L-shaped bracket with each branch of the L being inserted into one end of one of the profiles (3).

3. The protection device (1) according to one of claims 1 or 2, **characterized in that** the connecting means (5) between one of the profiles (3) and one of the corner parts (4) comprise at least one connecting member (51) passing through a first piercing (6) arranged in the profile (3) and a second piercing (7) arranged in the corner part (4), this second piercing (7) being arranged to match the first piercing (6) in the coupled state of the profile (3) and the corner part (4).

4. The protection device (1) according to one of claims 1 to 3, **characterized in that** the connecting means (5) for connecting the profiles (3) and the corner parts (4) to one another are configured to allow an invisible connection between one of the faces of the protective frame (2), namely, preferably, the so-called front face (21) of the protective frame of the computer apparatus corresponding to the face of the protective frame (2) that is looked at during the viewing of the screen (15) in the state of the computer apparatus (14) inserted into the protective frame (2).

5. The protection device (1) according to one of claims 1 to 4, **characterized in that** the part (101) of the connector (10) of the lower crosspiece (33) of the protective frame (2) connectable to the computer apparatus (14) comprises a connector of the USB type.

6. The protection device (1) according to one of claims 1 to 5, **characterized in that** the part (100) of the connector (10) of the lower crosspiece (33) of the protective frame (2) complementary to the connector (11) equipping the electrical recharging base (8) comprises at least one electrically conductive chip arranged flush with the lower crosspiece (33).

7. The protection device (1) according to one of claims 1 to 6, **characterized in that** the electrical recharging base (8) assumes the form of a housing made in at least a first housing part (12) and a second housing part (13), the first housing part (12) outwardly being L-shaped to form a seat (121) and a back part (122), the seat (121) incorporating the connector (11) of the recharging base (8) and the back part (122) being able to form a bearing surface for one of the faces (21, 22) of the protective frame (2) in the state of the protective frame (2) electrically connected to the recharging base.

8. The protection device according to claim 7, **characterized in that** the second housing part (13) outwardly comprises a flat bearing surface (131) for the bearing of the housing on a support surface, this second housing part (13) comprising at least two assembly positions with the first part (12) of the housing and corresponding for one, to a position in which the flat surface (131) of the second housing part (13) forms the back of the back part (122) of the first housing part (12), for the other, to a position in which the flat surface (131) of the second housing part (13) forms the bottom of the seat (121).

9. An assembly comprising a portable computer apparatus (14) comprising a screen (15) and a protection device (1) for said computer apparatus (14), **characterized in that** the protection device (1) is according to one of claims 1 to 8.

10. The assembly according to claim 9, **characterized in that** the portable computer apparatus (14) is selected from the group made up of mobile telephones, tablets and portable computers.
